# EUROPEAN PATENT APPLICATION

(11) **EP 2 639 438 A1**
(43) Date of publication of application: **18.09.2013**
(21) Application number: 12159301.6
(22) Date of filing: 13.03.2012
(51) Int. Cl.: F02F 3/00, F16J 1/08, F16J 9/20

(54) **Piston and lubricant distribution device for reciprocating piston combustion engine**

(71) Applicant: Wärtsilä Schweiz AG, 8401 Winterthur (CH)
(72) Inventor: Räss, Konrad, 8457 Humlikon (CH); Nurmi, Hannu, 65380 Vaasa (FI)
(74) Representative: Sulzer Management AG

(57) **Abstract**

A piston (1) for a reciprocating combustion engine (2) has a piston crown (111) end facing the combustion space and a piston skirt end remote from the combustion space (112) and a peripheral surface (7) extending between said piston crown end facing the combustion space (111) and said piston skirt end remote from the combustion space (112). A lubricant reservoir (8) is provided on a peripheral surface (7, 71, 72, 73) of the piston (1) or on a piston ring (41, 42, 43), which lubricant reservoir (8) has an opening (81) in the direction of the piston crown end (111) facing the combustion space of the piston (1) and a lubricant collection element (82) to prevent lubricant from flowing downwardly such that lubricant is collectable in the lubricant collection element (82) and is releasable upon movement of the piston (1).

## Description

The invention relates to a piston, to a piston ring and to a lubricant distribution device for a piston of a reciprocating piston combustion engine, in particular a large engine in accordance with the preamble of the independent claims 1, 13. It further relates to a method for lubrication of a piston running surface of a cylinder in accordance with the preamble of claim 14. The large engine can be configured in particular as a two-stroke diesel engine or a four stroke diesel engine.

The pistons known from the prior art for example for large diesel motors, but not only for them, are as a rule equipped with a packing of a plurality of piston rings arranged above one another in a respective piston ring groove. The known piston ring packings typically include at least two piston rings, usually, however, three, four or even five piston rings, depending on the size and/or power of the engine or depending on the demands and the special operating conditions under which the engine is operated. In this respect, the trend is increasingly toward piston ring packings having as few piston rings as possible. For instance, piston ring packings having only two piston rings are being used advantageously in the meantime. In very specific cases, pistons are even in principle possible having only one single piston ring.

The piston rings which satisfy different functions such as the guiding of the piston in the cylinder, the distribution and/or wiping off of a lubricant on the running surface of the cylinder, the sealing of the combustion space toward the lower side of the piston, etc., are exposed to substantial strains in the operating state. The piston rings are thus directly in rubbing contact with the cylinder running surface, the combustion pressure has to be taken up by the piston rings and the piston rings are thus exposed to substantial thermal, mechanical and chemical strains.

In this respect, the piston ring packing does not take over the centration of the piston in the cylinder, as is frequently mistakenly assumed. This is namely not possible at all for construction reasons. The piston rings themselves are admittedly always automatically guided in centered form with respect to the radial direction since their outer diameter in the non-installed situation is always selected somewhat larger than the inner diameter of the cylinder, with the diameter of the piston rings being elastically variable such that the piston ring is always urged toward the cylinder wall under a definable pressure in the peripheral direction. The inner diameter of the piston rings is, in contrast, larger than the outer diameter of the piston ring grooves at the piston in which the piston rings are arranged at the piston. The piston ring packing or the individual piston rings are thus arranged "floating freely" with respect to the piston or to the piston ring grooves. This is also absolutely necessary since, where possible, the piston rings may not be in permanent rubbing contact with the piston ring grooves since otherwise the piston ring would no longer be ideally guided at the cylinder wall, seizures can occur at the cylinder wall and/or in the piston ring grooves and thus serious damage up to the feared scuffing can occur.

For example, with longitudinally scavenged large two-stroke diesel engines, the use of a piston ring packing is common practice which is composed of two to five piston rings for the sealing of the combustion space with respect to the lower piston side, which is directed toward the receiver space, from which fresh air flows through the scavenging slits into the combustion space of the cylinder at the start of the scavenging phase. The lower piston rings are more or less severely stressed in dependence on the annular clearance between the piston and the cylinder wall. In this respect, different types of instabilities occur between the lower piston rings which can, for example, result in pressure fluctuations which in turn cause instabilities in the piston running, inter alia because too many piston rings are present which have similar or the same functions.

Large engines, in particular large diesel engines are frequently used in this respect as drive units for ships or also in stationary operation, e.g. for the driving of large generators for the generation of electrical energy. In this respect, the engines as a rule run in permanent operation over considerable time periods, which makes high demands on the operating security and on the availability. In particular long servicing intervals, low wear and an economic handling of fuels and operating materials are therefore central criteria for the operation of the machine for the operator. The piston running behavior of such large-bore slow running diesel engines is, among others, a determining factor for the length of the servicing intervals, the availability and, via the lubricant consumption, also directly for the operating costs and thus for the operating efficiency. Thus not only the complex problem of the cylinder lubrication of engines becomes more and more important, with the cylinder lubrication in particular taking place in large diesel engines by lubrication devices in the piston moving to and fro or being realized by lubrication oil nozzles provided in the cylinder wall.

One point which causes problems again and again in the operation of combustion engines are combustion residues which can be deposited at the most varied points in the engine. Above all with large two-stroke diesel engines which are frequently operated with heavy fuel oil, combustion residues represent a substantial problem since the fuel used, namely the heavy fuel oil, is charged with a number of substances which can result in solid, liquid and gaseous combustion residues of all kinds.

A further substantial point is, on the one hand, the dynamic behavior of the piston rings of the piston ring packing in the operating state. On the other hand, provision must be made for a sufficient sealing of the combustion space toward the lower side of the piston.

With respect to the dynamic behavior of the piston rings, specifically of the less strained "lower" piston rings which do not have any direct connection to the combustion space, but are rather separated from the combustion space by a top ring of the piston ring packing, it has been found that these "lower" piston rings of the piston ring packing tend to uncontrolled movements due to the comparatively small gas-dynamic strains, which is not in agreement with the required hydrodynamic ideal movement form of a piston ring.

A further factor which in particular also has an effect on the movement of the "upper" top ring, that is on that piston ring of the piston ring packing which is directly adjacent to the combustion space, is the well-known "blowby" effect. The skilled person understands the blowby effect as the fact that the piston rings do not seal absolutely pressure-tight, but rather a specific quantity of gas flows out of the combustion space, typically 6-8% of the mass portion of the gaseous content of the combustion space, past the piston ring packing in a more or less uncontrolled manner in the direction toward the lower side of the piston, whereby the thermal energy contained therein is essentially lost.

It must therefore in particular be ensured that the pressure energy produced in the combustion space in the proximity of the top dead center is usable as completely as possible and does not flow off unused in part past the piston in the form of a gas flow into the lower part of the cylinder and into the receiver space. In addition, with insufficient sealing, there is always the risk that individual particles are torn out of deposits of combustion residues in an uncontrolled manner by the gas flow which flows downwardly past the piston so that they can be deposited e.g. in the lower part of the cylinder at the cylinder running surface so that they can not least contaminate the cylinder lubrication oil and can, in the worst case, result in damage such as the feared scuffing.

In this respect, in practice, a lubricant distributor ring is also very frequently provided in the piston ring passage which is intended to provide a better distribution of the lubricant on the cylinder running surface, in particular in the peripheral direction of the cylinder running surface. The known lubricant distributor rings, which are also often called oil scrapers or oil catch tanks, in this respect also collect solid, liquid and gaseous harmful residues contained e.g. in the lubricant in addition to the lubricant, which often results in the so-called "fretting" or "scuffing", that is in serious damage at the cylinder running surface, the piston rings and the piston itself.

Furthermore, one substantial reason for the fact that an avoidance of the aforesaid unwanted, and in part extremely harmful effects is increasingly gaining importance can not least be seen in the fact that ever higher performance is required with a simultaneous reduction in fuel and lubricant consumption and, furthermore, above all the emission standards are also being constantly tightened.

The aforesaid negative effects, however, result in more fuel and lubricant consumption and naturally also in contamination-induced wear phenomena at pistons, piston rings and cylinder walls and in a deterioration of the exhaust gas values as well as in premature wear due to hydrodynamically badly optimized movement behavior of the piston rings of the piston ring packing.

It is therefore the object of the invention to propose an improved piston as well as a corresponding piston ring and lubricant collection and distribution system with which the previously described disadvantages of the prior art are avoided. Furthermore, an improved distribution of the lubricant should specifically be ensured, with provision simultaneously being made that the concentration of the contaminant deposits collected in the lubricant distribution ring is not increased to a predefined degree. A more economic operation of the reciprocating piston combustion engine, longer service intervals and thus a longer service life of the affected components and of the engine overall should ultimately thereby be ensured.

The subject matters of the invention satisfying these objects are indicated by the features of the independent claims 1 and 13. The corresponding method of improved lubrication is subject of independent claim 14.

The dependent claims relate to particularly advantageous embodiments of the invention.

The invention thus relates to a piston for a reciprocating combustion engine having a piston crown end facing the combustion space and a piston skirt end remote from the combustion space and a peripheral surface extending between said piston crown end facing the combustion space and said piston skirt end remote from the combustion space. A lubricant reservoir is provided on a peripheral surface of the piston or on a piston ring, which lubricant reservoir has an opening in the direction of the piston crown end facing the combustion space of the piston and a lubricant collection element to prevent lubricant from flowing downwardly such that lubricant is collectable in the lubricant collection element and is releasable upon movement of the piston.

It has become possible for the first time to improve the distribution of the lubricant by the piston in accordance with the invention by making use of the acceleration of the piston especially during its path from the bottom dead center position to the top dead center position to distribute the lubricant onto the cylinder wall. Due to the acceleration of the piston, inertial forces act on the lubricant whereby the lubricant is rather collected in the bottom portion of the lubricant collection element if the piston is located at its bottom dead center position. If the lubricant collection element is configured to be a cavity, such as an annular groove, the lubricant is distributed evenly in the annular groove. However, depending on the filling level oil can be forced out of the groove due to inertial forces in particular when the groove is almost filled completely.

When the piston is close to the top dead center position, thus before reaching the top dead center position, the lubricant distributed in the cavity is ejected from the cavity and splashes into the space between the peripheral surface of the piston and the cylinder liner. In particular, when the piston comes to rest briefly in its top dead center position and its respective bottom dead center position. The effect of the inertial forces is supposed to be strongest at the respective top or bottom dead center position.

The acceleration and deceleration forces depend on the rotational speed and the configuration of the drive unit and have to be considered when dimensioning the lubricant collection element. In particular, the shape and size of the lubrication collection element is dependent on the volume of lubricant to be handled.

To achieve this, a lubricant reservoir is provided by the invention at the part ring packing on a peripheral surface of the piston or on a piston ring. The part ring packing includes, in a particularly preferred embodiment, a first piston ring which is usually the top ring, that is the piston ring which is arranged closest to the combustion space, in practice and is equipped at a lower side facing a piston skirt end remote from the combustion space with a lubricant reservoir and a lubricant collection element to prevent lubricant from flowing downwardly such that lubricant is collectable in the lubricant collection element and is releasable upon movement of the piston from the top dead center position to the bottom dead center position.
The lubricant reservoir on the piston has an opening to direct the flow of lubricant onto the cylinder surface during the acceleration of the piston by making use of the inertia of the lubricant. The lubricant thus does not follow the acceleration movement of the piston but lags behind and is thus ejected from the opening to be applied onto the cylinder wall.

Not only the fuel and lubricant consumption can thus be noticeably reduced by the invention, but also contamination-induced wear phenomena at pistons, piston rings and cylinder walls, which ultimately result in a deterioration of the exhaust gas values as well as in premature wear due to hydrodynamically poorly optimized movement behavior of the piston rings of the piston ring packing, are considerably reduced, whereby service intervals can be extended and the service life of the involved components is increased so that an engine having a piston in accordance with the invention can be operated more economically in comparison with the prior art and is also more environmentally friendly due to improved emission values.

It is important for a preferred embodiment of the invention that the lubricant collection element is a lubricant collection pocket and/or a top surface of a piston ring and/or a piston ring groove. The lubricant collection pocket as well as the top surface of the piston ring or the piston ring groove serve to retain the lubricant which is collected upon the upward stroke of the piston, when the piston speed is reduced towards the top dead center position and/or during the downward stroke of the piston until it reaches its bottom dead center position again.

Before the invention will be explained in more detail further below with reference to specific exemplary embodiments, the basic principles of the function of a piston in accordance with the invention will be looked at in somewhat more detail.

The aim of the optimized lubricant distribution by the lubricant reservoir provided on the piston or a piston ring of the piston ring packing of the present invention is also, among other things, to generate a hydrodynamic pressure which supports the separation of the piston ring and the cylinder running surface. Thereby the lubrication between the cylinder running surface and the piston ring is improved, the contact times between the cylinder running surface and the piston ring are reduced and ultimately the wear is thereby reduced. For this purpose, the contact surface of the piston ring which is in rubbing contact with the cylinder running surface can e.g. be suitably structured or textured, e.g. by machining with a laser or other suitable methods known per se, which can additionally positively influence the cooperation of piston ring and cylinder running surface with a suitable choice of the structuring and can accelerate the formation of a hydrodynamic lubricant film.

When the piston is located at the top dead center on its axial movement in the cylinder bore or cylinder liner, its speed is at zero, or is exactly zero exactly at the top dead center. The piston ring is in intensive contact with the cylinder running surface where conditions of mixed friction are present. As soon as the combustion process starts in the combustion space, the piston starts to move in the direction toward the bottom dead center. It is now additionally possible by the piston of the present invention to build up a stable hydrodynamic lubrication film much faster than known from the prior art, whereby heat development and wear are considerably reduced. The skilled person selects the geometry, form and mutual position and arrangement of the lubricant reservoir between two adjacent piston rings or on one of the piston rings depending on the use, on the operating conditions under which the engine is normally operated, and depending on the combustion parameters such as pressure, temperature, fuel used, etc.

According to an embodiment, the lubricant reservoir can be arranged at the peripheral surface of the piston and can be delimited by a piston ring. In this embodiment, the lubricant collection element is configured as a cut-out or recess at the peripheral surface of the piston such that any lubricant which is scraped from the cylinder wall by the piston ring arranged below the lubricant reservoir enters the lubricant collection element and is kept there as the piston ring provides a fluid-tight seal with the cylinder wall. Upon initiation of the downward stroke of the piston during the acceleration thereof, the lubricant travels upwardly along the inclined wall portion of the lubricant collection element and is ejected onto the cylinder wall.

According to a further embodiment the lubricant reservoir can be configured as an annular lubricant distribution groove or an indentation or a recess. Thereby the lubricant from the entire circumference of the cylinder wall is collected and the lubricant is evenly distributed over the circumference of the piston, if the groove is in a horizontal position. Thus any local surplus or deficit of lubricant can be equalized. The same amount of lubricant can thus be supplied onto the entire circumference of the cylinder wall thereby avoiding local over supply of lubricant.

Alternatively in particular for cases in which an exact horizontal position of the annular lubricant distribution groove or indentation or recess can not be maintained due to e.g. a non horizontal position of the engine in operation, the lubricant collection element can be configured as a bore, in particular a plurality of bores arranged on the peripheral surface of the piston or on the piston ring. Advantageously the distance between neighboring bores is constant, so as to provide for an even distribution of lubricant onto the cylinder wall.
Alternatively a circumferential groove may be provided with a number of baffles which ensure that a separation of individual lubricant collection spaces of the lubricant collection element can be obtained. Thereby lubricant can be kept in any of these spaces even if the position of the piston axis deviates from the vertical position, thus the level of lubricant in each of the collection spaces of the circumferential groove is not constant due to this variation of the engine position resulting in a deviation of the piston axis from its vertical position.

In order to keep a sufficient amount of lubricant in the lubricant collection element and at the same time to ensure that the lubricant present in the lubricant collection element leaves this lubricant collection space upon acceleration of the piston the lubricant collection element is formed as a v-shaped groove and/or indentation and/or bore, wherein the bottom of the v-shaped groove can be rounded.

In order to facilitate the dispensing of lubricant onto the cylinder wall, the opening of the lubricant collection element at least partially faces the piston crown end facing the combustion space. In particular a passage may be provided which is inclined in such a way that the lubricant is directed upwardly and outwardly towards the cylinder wall. Thereby the angle and speed of the lubricant flow can be controlled. The passage can be formed as a connection passage, which is provided for connecting the lubricant collection element to the opening.

According to an alternative embodiment, the lubricant collection element comprises a lubricant collection ring.

It is self-explanatory in this respect that a piston in accordance with the invention can include more than only two piston rings, as will in particular become clear further below. In this respect, a piston of the present invention in a specific example only includes two piston rings, namely the first piston ring and a lubricant collection ring disposed thereunder which will be discussed in more detail further below. In order to improve the collection of the lubricant over the cylinder running surface even further and to reduce the charge of the lubricant with pollutants as much as possible or to keep it as low as possible, the lubricant collection ring can also be arranged between the first piston ring and the second piston ring in a preferred embodiment, with the second piston ring, as already mentioned, also being able to be omitted in a piston in accordance with the invention.

A passage to the lubricant collection element being configured as a storage chamber for lubricant, is particularly preferably provided at the lubricant collection ring of the present invention and connects an inlet opening at an upper side facing the combustion space which can be acted on by a predefinable portion of the combustion space pressure and an outlet opening provided at an outer peripheral surface which is in rubbing contact with the cylinder wall in the operating state.

The lubricant collected in the passage or in the storage reservoir of the passage is thereby conducted back through the passage to the lubricant collection element formed as a storage chamber.

According to an alternative embodiment a passage can be provided in the piston ring. The passage in the piston ring leads from the lubricant collection passage or lubricant collection bore to the lubricant collection element configured as a storage chamber. Advantageously the angle of inclination of the passage is greater than the angle of inclination of the lubricant connection passage leading to the opening.

According to a further embodiment, the lubricant reservoir is at least partially closed by a closure element extending circumferentially around the lubricant reservoir. The closure element is a cover which partially covers the lubricant reservoir. The closure element is disposed with a passage for collecting lubricant and a lubricant connection passage to distribute the lubricant upon acceleration of the piston during the downward stroke.

Finally, the invention also relates to a lubricant distribution ring for a piston in accordance with the invention of a reciprocating piston combustion engine, with a connection passage, preferably including a storage space for lubricant, being provided at the lubricant distribution ring which connects an inlet opening which can be acted on by a predefinable portion of a combustion space pressure at an upper side facing a combustion space in the installed state and an outlet opening provided at an outer peripheral surface which is in rubbing contact with a cylinder wall in the installed and operating state.

To optimize the controlled blowby effect in accordance with the present invention, the first piston ring, or also other piston rings present in the piston ring packing, can have an outer contour asymmetric with respect to the piston axis and cooperating with the cylinder wall, with the width of the first piston ring preferably becoming increasingly larger in the direction of the recess.

As already mentioned further above, the second piston ring is advantageously designed so that it cooperates in a largely pressure-tight manner with the cylinder wall of the cylinder in the installation and operation state so that the piston ring packing seals the combustion space better overall toward the lower side of the piston than is the case in a piston known from the prior art.

It is self-explanatory that the examples of embodiments of pistons or piston rings in accordance with the invention described in this application are only to be understood in exemplary fashion and that in particular all suitable combinations of the embodiments shown are covered by the invention.

The lubricant can be introduced into the lubricant collection element by a source arranged along the running surface of the cylinder, that is for large engines the inner surface of the cylinder liner or the piston.
From this source, lubricant is fed into the space between the running surface of the cylinder and the piston. The source of lubricant can be located on the running surface of the cylinder itself. In an embodiment a scraping element is provided, which collects the lubricant from the running surface of the cylinder and feeds it into the lubricant collection element.
In another embodiment a lubricant distribution element can be provided on the running surface of the cylinder and/or on the outer surface of the piston. The lubricant is distributed onto the running surface of the cylinder and/or onto the piston ring and/or onto the piston surface by the lubricant distribution element. The lubricant distribution element can in particular be configured as a nozzle which is arranged on the running surface of the cylinder. A plurality of such nozzles can be foreseen, which can advantageously be evenly distributed onto the running surface of the cylinder.

The lubricant distribution element can be arranged in the top dead center position or the bottom dead center position of the piston in the cylinder. Alternatively or in addition thereto the lubricant distribution element can be arranged in a location between the top dead center position and the bottom dead center position of the piston.

The invention further relates to a reciprocating combustion engine, in particular a large engine comprising a piston and a cylinder, in which cylinder the piston bounds a combustion space in the installed state and is arranged movable to and fro in the cylinder between a top dead center and a bottom dead center in the axial direction along a piston axis of the piston. A lubricant reservoir is provided on the peripheral surface of the piston or on a piston ring facing the cylinder. The lubricant reservoir has an opening in the direction of the piston crown end facing the combustion space of the piston and a lubricant collection element to prevent lubricant from flowing downwardly such that lubricant is collectable in the lubricant collection element and is releasable upon movement of the piston.

The invention further relates to a method for lubrication of a piston running surface of a cylinder in a reciprocating combustion engine, wherein a piston is disposed with a lubricant reservoir arranged on a peripheral surface of the piston or on a piston ring, the lubricant reservoir having an opening in the direction of the piston crown end facing the combustion space of the piston and a lubricant collection element to prevent lubricant from flowing downwardly. The lubricant is collected in the lubricant collection element at least at one location of the travel path of the piston and is released when the piston moves from the top dead center position to the bottom dead center position or from the bottom dead center position to the top dead center position. The lubricant can be advantageously released during the period of acceleration of the piston between the bottom dead center and the top dead center position. Thereby use is made of the inertial force acting on the lubricant preventing the lubricant from following the acceleration movement of the piston. The inertial force can thus be advantageously be used to dispense the lubricant onto the cylinder surface.

The invention will be explained in more detail in the following with reference to the drawing. There are shown in a schematic representation:
- Fig. 1: a piston in accordance with the invention;
- Fig. 2a: a first embodiment of a lubricant reservoir arranged on the peripheral surface of the piston;
- Fig. 2b: a second embodiment of a lubricant reservoir located on the peripheral surface of the piston;
- Fig. 3a: a first embodiment of a piston ring with a lubricant reservoir;
- Fig. 3b: a second embodiment of a piston ring with a lubricant reservoir;
- Fig. 3c: a third embodiment of a piston ring with a lubricant reservoir;
- Fig. 3d: a fourth embodiment of a piston ring with a lubricant reservoir;
- Fig. 4: a third embodiment of a lubricant reservoir located in the peripheral surface of the piston comprising a lubricant collection ring, a lubricant reservoir and a lubricant distribution passage;
- Fig. 5: a fourth embodiment of a lubricant reservoir located in the peripheral surface of the piston comprising a lubricant collection passage in a piston ring, a lubricant reservoir and a lubricant distribution passage;
- Fig. 6: a fifth embodiment of a lubricant reservoir located in the peripheral surface of the piston comprising a lubricant collection passage, a lubricant reservoir and a lubricant distribution passage;
- Fig. 7: a sixth embodiment of a lubricant reservoir located in the peripheral surface of the piston comprising a lubricant collection passage in a lubricant collection ring, a lubricant reservoir and a lubricant distribution passage.

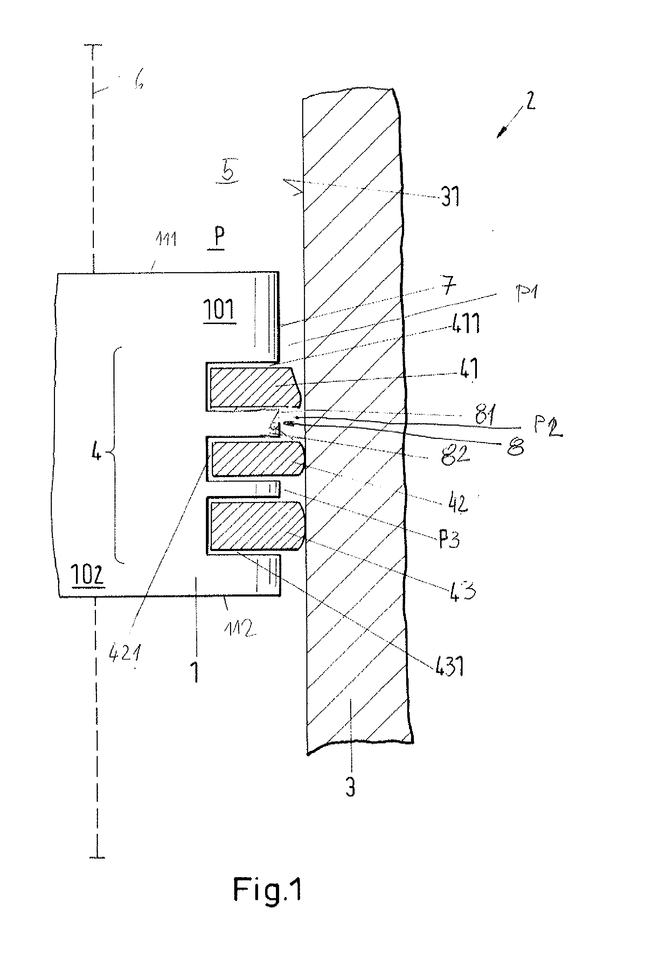

In Fig. 1, a first embodiment of a piston in accordance with the invention, which is designated as a whole by the reference numeral 1 in the following, is shown schematically in a sectional drawing in cooperation with the cylinder running surface 31 of the cylinder 3 of an reciprocating combustion engine 2, which can in particular be configured as a large engine, in particular a two-stroke large diesel engine or a four-stroke large diesel engine. The cylinder can be configured also as a cylinder liner.

The piston in accordance with the invention in accordance with Fig. 1 is a piston 1 for a reciprocating combustion engine which as a rule comprises a plurality of cylinders 3. In the assembled state, each cylinder 3 and each of the pistons 1 bound a combustion space 5 in accordance with Fig. 1. Each piston 1 is arranged movable to and fro in the cylinder 3 between a top dead center and a bottom dead center in the axial direction along a piston axis 6 of the piston 1. The piston is disposed with a piston crown 101 facing the combustion space 5 and a piston skirt 102 remote from the combustion space 5 facing the piston rod. The piston rod extends from the piston skirt end 112 remote from the combustion space and is connected to a crosshead. By means of a connecting rod connecting the crosshead to the crank shaft a rotary motion of a drive shaft is obtained. The drive shaft is used e.g. for driving a propeller of a ship. The piston rod and the connecting elements for the drive shaft are not shown in Fig. 1.

A piston ring packing 4 which cooperates with a cylinder wall 31 of the cylinder 3 in a rubbing manner is formed at a peripheral surface 7 of the piston 1 between a piston crown 101 facing the combustion space 5 and a piston skirt 102 remote from the combustion space 5 in a known manner. The piston crown end facing the combustion space 111 is in this embodiment the top of the piston crown 101. The piston skirt end remote from the combustion space 112 is in this embodiment the base of the piston skirt 102.

The piston ring packing 4 in the specific embodiment of Fig. 1 includes a first piston ring 41 in a first piston ring groove 411. The first piston ring 41 is provided between the piston crown 101 and a second piston ring 42 arranged in a second piston ring groove 421. A third piston ring 43 in accordance with the invention is provided in a third piston ring groove 431 below the second piston ring 42.

A lubricant reservoir 8 is provided between the first piston ring 41 and the second piston ring 42. The lubricant reservoir 8 is provided in the peripheral surface 7 of the piston. The lubricant reservoir 8 has an opening 81 in the direction of the piston crown end 111 facing the combustion space 5 of the piston 1 and a lubricant collection element 82 to prevent lubricant from flowing downwardly. The lubricant is collectable in the lubricant collection element 82 and is releasable upon movement of the piston 1 from the top dead center position to the bottom dead center position.

The method for lubrication of a piston running surface of a cylinder 3 in a reciprocating combustion engine comprises the subsequent steps. A piston is disposed with a lubricant reservoir 8 arranged on a peripheral surface 7 of the piston 1 or on a piston ring 41, 42, 43. The lubricant reservoir 8 has an opening 81 in the direction of the piston crown end 111 facing the combustion space of the piston 1 and a lubricant collection element 82 to prevent lubricant from flowing downwardly. The lubricant is collected in the lubricant collection element 82 of the lubricant reservoir 8 at least during the movement of the piston in the direction of the top dead center position until the piston has reached the top dead center position and is released when the piston moves from the top dead center position to the bottom dead center position. The lubricant can be released during the period of acceleration of the piston between the top dead center and the bottom dead center position.

The first piston ring 41 is designed in this respect such that a first part pressure P1 of the combustion space pressure P can be formed in a region at an upper side of the first piston ring facing the combustion space 5 in the operating state and a second part pressure P2 of the combustion space pressure P can be formed in a region at an upper side of the second piston ring 42 facing the combustion space 5 in the operating state. A third part pressure P3 of the combustion space pressure P can be formed in a region at an upper side of the third piston ring 43 facing the combustion space 5 in the operating state In the example of Fig. 1, the combustion space pressure P is the sum of a pressure drop over the third part pressure P3 and of the first part pressure P1 and of the second part pressure P2, with the first part pressure P1 amounting to approximately 65% of the combustion space pressure P. The second piston ring 42 and/or the third piston ring 43 is in this respect designed such that it cooperates in a largely pressure-tight manner with the cylinder wall 31 of the cylinder 3. It is possible to dispense with one of the second or third piston rings.

In another embodiment not shown in the figures, a lubricant distribution ring can be provided between the first piston ring 41 and the second piston ring 42 or the third piston ring 43 if present. It is also possible that the second piston ring 42 is itself designed as a lubricant distribution ring.

As can clearly be recognized, the first piston ring 41 in accordance with Fig. 1 has an outer contour asymmetric with respect to the piston axis 6 and cooperating with the cylinder wall 31, with the width b of the first piston ring 41 becoming increasingly larger in the direction of the lubricant reservoir 8. The width b is measured in a plane which is arranged normal to the piston axis 6. This shape substantially facilitates the blowby to be adjustable in a controlled manner. Thereby the gas flow past the first piston ring 41 is controlled.

In another embodiment to the one in accordance with Fig. 1, the second piston ring 42 and/or the third piston ring 43 can be omitted also or additional piston rings can be provided.

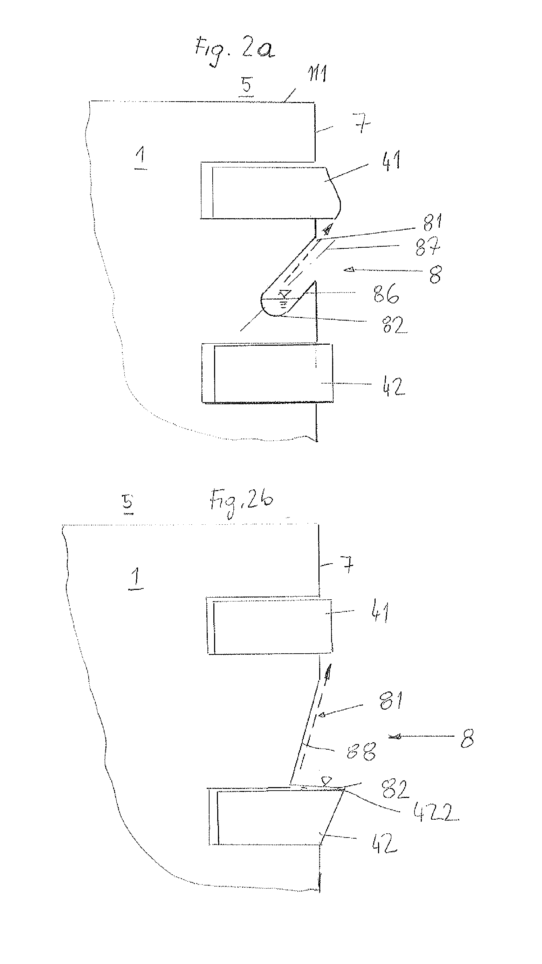

Figs. 2a to Fig. 2b show by way of examples for illustration two embodiments of lubricant reservoirs 8 arranged on the peripheral surface of the piston 1 between the first piston ring 41 and the second piston ring 42.

According to Fig. 2a the lubricant reservoir 8 has a lubricant collection element 82 which is formed as a lubricant collection pocket. Furthermore the lubricant reservoir 8 has an opening 81 facing the cylinder wall 31 which is not shown in this Fig. The lubricant collection element 82 and the opening 81 are connected by a lubricant passage. The passage has central axis which is arranged in an angle to the piston axis 6. The angle is less than 90 degrees preferably less then 75 degrees, particularly at most 60 degrees. The lubricant reservoir can be formed as a bore. The passage 86 can be of cylindrical or conical shape.
The lubricant reservoir can also be formed as an annular indentation. Thus in this case the lubricant reservoir extends around the circumference of the piston.

According to the embodiment shown in Fig. 2b, the lubricant reservoir 8 is shaped as a cut-out of the peripheral surface 7 of the piston 1. The cut out extends o the peripheral surface 7 between the first piston ring 41 and the second piston ring 42. The lubricant reservoir 8 has an opening 81 which corresponds to the surface portion which has been taken away to shape the cut-out. A lubricant collection element 82 is formed by the upper surface of the second piston ring 42 and is delimited by the inclined wall of the cut-out. The second piston ring can in particular be disposed with an aggressive scraping profile. This aggressive scraping profile is formed by an arcuate tip 422 which rubs in operation on the inner wall of the cylinder and thereby scrapes any lubricant present thereon onto the lubricant collection element 82. The arcuate tip 422 of the second piston ring 42 is in operation in contact with the cylinder wall. The cylinder wall together with the upper surface of the second piston ring as well as the wall 88 of the cut out delimit the lubricant reservoir 8.
During the upward stroke of the piston, that means its movement into the direction of the top dead center, the lubricant is collected from the cylinder wall. When the piston performs its downward stroke, the lubricant is released from the lubricant reservoir in particular during the period of acceleration of the piston. The inertial forces acting on the lubricant cause the lubricant to be ejected out of the opening onto the cylinder wall as the lubricant due to its inertial mass may not follow the acceleration of the piston during its downward stroke. This principle of operation applies to all embodiments of this invention.

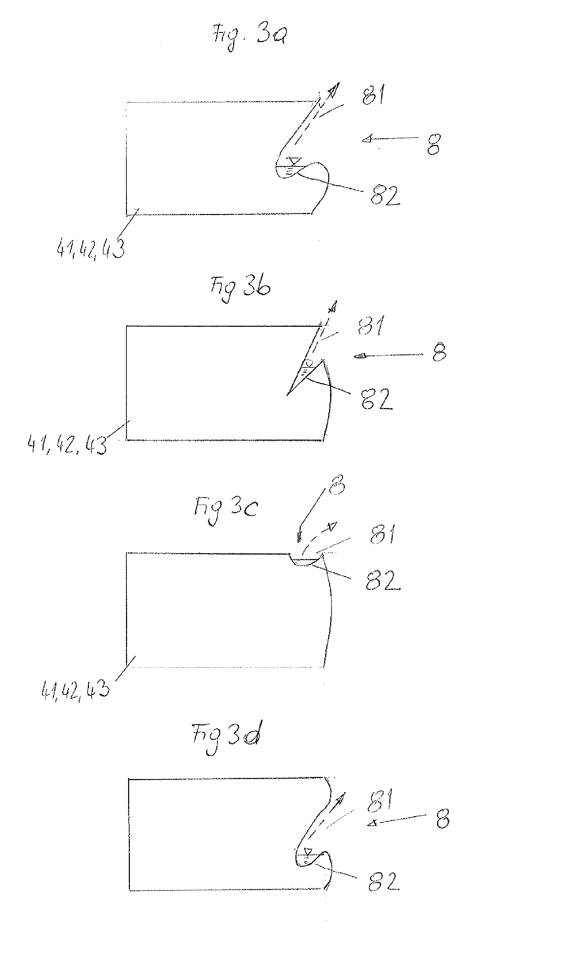

Fig. 3a to Fig. 3d show variants of lubricant reservoirs 8 located on one of the piston rings 41, 42, 43. The lubricant reservoirs 8 can be located on the peripheral surface 71, 72, 73 of the respective piston ring or also on the upper surface thereof as shown in Fig. 3c. The lubricant reservoirs can in this case be configured as isolated bores or can be annular grooves. These annular grooves can extend around at least a portion of the circumference of the piston ring on the peripheral surface or the upper surface thereof.

According to Fig. 3a, a lubricant reservoir 8 is foreseen, which has an opening 81 facing the cylinder wall and a lubricant collection element 82. The lubricant collection element is formed as a lubricant pocket which contains lubricant at least when the piston is in its bottom dead center position or is filled with lubricant when the piston travels from the bottom dead center position to the top dead center position. In case the lubricant reservoir is formed as a bore it has a central axis 87 which is inclined with respect to the piston axis 6. The angle of inclination is less than 90 degrees preferably less then 75 degrees, particularly at most 60 degrees. The bottom of the lubricant collection element 82 has a U-shape.

Fig. 3b shows a second embodiment of a lubricant reservoir 8 located in one of the piston rings 41, 42, 43 on the respective peripheral surface 71, 72, 73 thereof. The embodiment according to Fig. 2b differs from the embodiment according to Fig. 2a in that the lubricant collection element 82 is formed as a v-shaped groove. The opening 82 of the v-shaped groove faces the cylinder wall.

Fig. 3c shows a third embodiment of a lubricant reservoir 8 located in one of the piston rings 41, 42, 43 on the respective upper surface thereof. The lubricant reservoir has an opening 81 facing the combustion space 5 (see Fig. 1). The lubricant collection element 82 is a lubricant collection pocket. This lubricant collection element can be also formed as an annular open channel extending at least over a portion of the circumference of the respective piston ring.

Fig. 3d shows a fourth embodiment of a lubricant reservoir located in one of the piston rings 41, 42, 43 on the respective peripheral surface 71, 72, 73 thereof. The embodiment according to Fig. 3d differs from the embodiment according to Fig. 3a in that the position of the opening 81 is roughly half way between the top surface and the bottom surface of the piston ring.

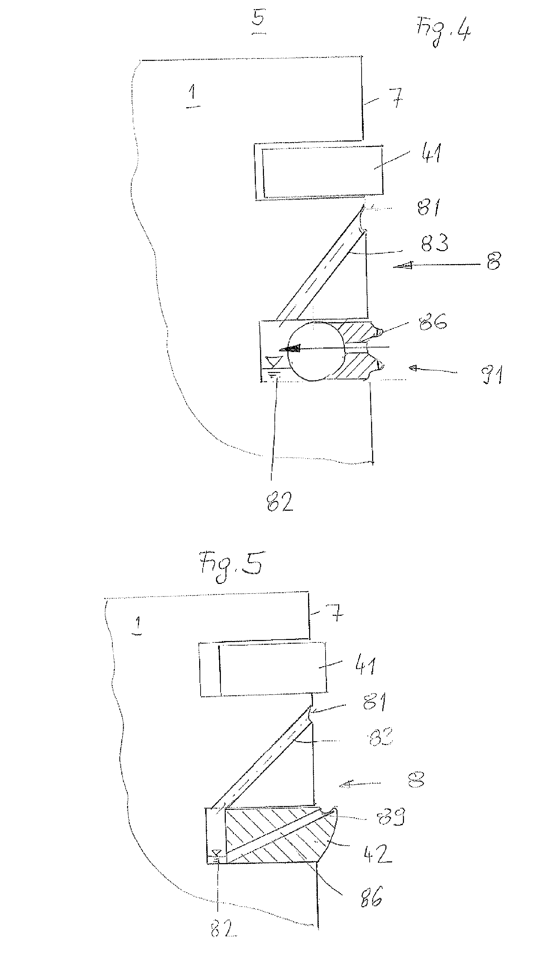

Fig. 4 shows a third embodiment of a lubricant reservoir 8 located in the peripheral surface 7 of the piston 1 comprising a lubricant collection ring, a lubricant collection element and a lubricant distribution passage. The lubricant reservoir 8 makes use of a lubricant collection element 82 present in a lubricant collection ring 91 arranged on the peripheral surface 7 of the piston 1. The lubricant collection ring 91 replaces in this embodiment the second piston ring 42. The lubricant collection ring can be of the same configuration as disclosed in EP 1 936 245 A1.

The lubricant collection ring contains a recess 92 is made in the form of a ring groove 93 running around the periphery of the piston 1.

It is understood that, in another embodiment in accordance with Fig. 4, a plurality of peripheral ring grooves can also advantageously be provided in parallel or not in parallel.

Fig. 5 shows a fourth embodiment of a lubricant reservoir 8 located in the peripheral surface 7 of the piston 1 comprising a lubricant collection passage or lubricant collection bore 89 in a piston ring 42, a lubricant collection element 82 and a passage 86 leading from the lubricant collection passage or lubricant collection bore 89 to the lubricant collection element 82 being configured as a storage space. The lubricant is scraped from the cylinder wall by the second piston ring 42. On the upper surface of the piston ring 42 a recess which forms the lubricant collection passage or lubricant collection bore 89 can be provided which can have a similar configuration as shown in Fig. 3c. However contrary to the embodiment shown in Fig. 3c, the recess is connected by the passage 86 to the lubricant collection element 82 for guiding the lubricant to the lubricant collection element 82 which is arranged within a space in the piston ring groove. The lubricant collection element 82 is thus a storage space which is connected via a lubricant connection passage 83 to the peripheral surface 7 of the piston. The lubricant connection passage 83 is inclined with respect to the piston axis. The angle of inclination is less than 90 degrees, preferably less then 75 degrees, particularly at most 60 degrees. When the piston begins its downward stroke and is consequently accelerated, the lubricant flows through the lubricant connection passage 83 and into the space between first piston ring 41 and second piston ring 42. Advantageously a plurality of lubricant connection passages 83 is provided on the circumference of the piston 1 so as to allow for an even distribution of the lubricant onto the inner wall surface of the cylinder.

Advantageously the angle of inclination of the passage 86 is greater than the angle of inclination of the lubricant connection passage 83 leading to the opening 81.

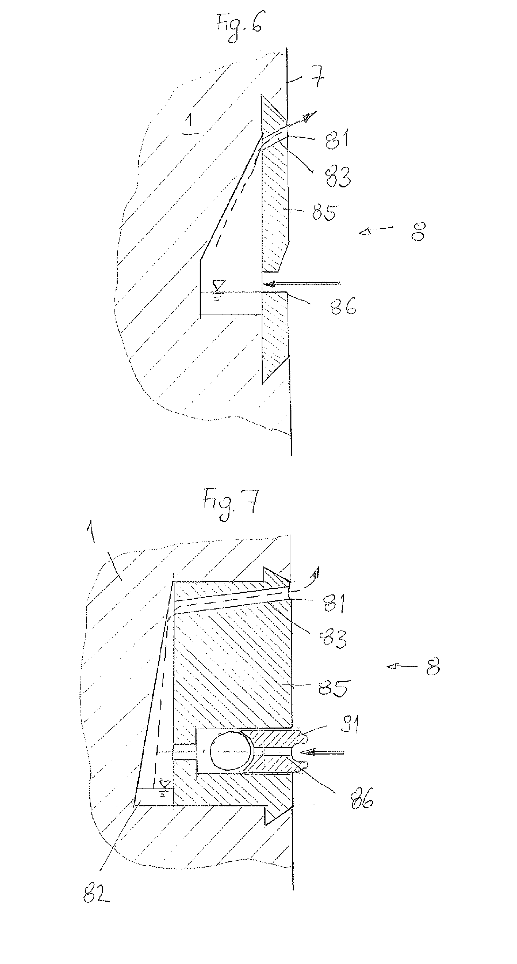

Fig. 6 shows a fifth embodiment of a lubricant reservoir 8 located in the peripheral surface 7 of the piston 1 in particular of the piston skirt end 112, comprising a lubricant collection passage 86, a lubricant collection element 82 and a lubricant distribution passage 83. The lubricant reservoir is configured as a cut out of roughly triangular or trapezoidal cross-section. The cut out is partially closed by a closure element 85. The closure element is mounted in a groove, e.g. a dove-tail groove provided in the peripheral surface 7. The closure element 85 contains the lubricant collection passage 86 leading to the lubricant collection element 82. The closure element 85 also contains the lubricant distribution passage 83. The lubricant distribution passage 83 is arranged above the lubricant collection passage and has preferably an inclination which provides for an upward flow of the lubricant.

The lubricant collection element 82 is filled with lubricant being injected into the cylinder space from lubrication sites provided in the cylinder wall. The cylinder lubrication can be of a configuration as disclosed for instance in EP 2 199 549 A1.

Fig. 7 shows a sixth embodiment of a lubricant reservoir 8 located in the peripheral surface 7 of the piston 1 comprising a lubricant collection passage 86 in a lubricant collection ring 91, a lubricant collection element 82 and a lubricant distribution passage 83. This embodiment differs from the embodiment according to Fig. 5 essentially by the provision of a lubricant collection ring 91 which is provided in the closure element 85.

It is possible in this respect that a lubricant distribution ring is provided in addition to the first piston ring 41 and to the second piston ring 42 in the piston ring packing 4. In another embodiment, it is possible that the second piston ring 42 is formed as a lubricant distribution ring. It is self-explanatory that a lubricant distribution ring can also be provided several times in one and the same piston ring packing 4.

## Claims

1. A piston (1) for a reciprocating combustion engine (2) having a piston crown (111) end facing the combustion space and a piston skirt end remote from the combustion space (112) and a peripheral surface (7) extending between said piston crown end facing the combustion space (111) and said piston skirt end remote from the combustion space (112), **characterized in that** a lubricant reservoir (8) is provided on a peripheral surface (7, 71, 72, 73) of the piston (1) or on a piston ring (41, 42, 43), which lubricant reservoir (8) has an opening (81) in the direction of the piston crown end (111) facing the combustion space of the piston (1) and a lubricant collection element (82) to prevent lubricant from flowing downwardly such that lubricant is collectable in the lubricant collection element (82) and is releasable upon movement of the piston (1).

2. A piston in accordance with claim 1, wherein the lubricant collection element (82) is a lubricant collection pocket and/or a top surface of a piston ring and/or a piston ring groove.

3. A piston according to claim 1 or claim 2, wherein the lubricant reservoir (8) is arranged at the peripheral surface (7) of the piston and is delimited by a piston ring.

4. A piston according to any one of the preceding claims, wherein the lubricant reservoir (8) is configured as an annular lubricant distribution groove and/or an indentation and/or a recess and/or a bore.

5. A piston according to any one of the preceding claims, wherein the lubricant collection element (82) is provided at the piston ring or at the peripheral surface (7) of the piston.

6. A piston according to claim 4, wherein the lubricant collection element (82) is provided at a peripheral surface (71, 72, 73) of the piston ring (41, 42, 43).

7. A piston according to claim 6, wherein the lubricant collection (82) element is formed as a v-shaped groove and/or indentation and/or bore, wherein the bottom of the v-shaped groove can be rounded.

8. A piston according to any one of the preceding claims, wherein the opening (81) of the lubricant collection element (82) at least partially faces the piston crown end (111) facing the combustion space.

9. A piston in accordance with any one of the preceding claims,
wherein a connection passage (83) is provided for connecting the lubricant collection element (82) to the opening (81).

10. A piston in accordance with any one of the preceding claims,
wherein the lubricant collection element (82) comprises a lubricant collection ring (91).

11. A piston in accordance with any one of the preceding claims,
wherein the lubricant reservoir (8) is at least partially closed by a closure element (85) extending circumferentially around the lubricant reservoir.

12. A piston in accordance with claim 11, wherein a passage (86) is provided for supplying the lubricant collection element (82) with lubricant.

13. A reciprocating combustion engine (2), in particular a large engine comprising a piston and a cylinder (3), in which cylinder (3) the piston bounds a combustion space (5) in the installed state and is arranged movable to and fro in the cylinder (3) between a top dead center and a bottom dead center in the axial direction along a piston axis (6) of the piston, wherein a lubricant reservoir (8) is provided on the peripheral surface (7, 71, 72, 73) of the piston (1) or on a piston ring (41, 42, 43) facing the cylinder (3), **characterized in that** the lubricant reservoir (8) has an opening (81) in the direction of the piston crown end (111) facing the combustion space of the piston (1) and a lubricant collection element (82) to prevent lubricant from flowing downwardly such that lubricant is collectable in the lubricant collection element (82) and is releasable upon movement of the piston (1) .

14. Method for lubrication of a piston running surface of a cylinder (3) in a reciprocating combustion engine, wherein a piston is disposed with a lubricant reservoir (8) arranged on a peripheral surface (7, 71, 72, 73) of the piston (1) or on a piston ring (41, 42, 43), the lubricant reservoir (8) having an opening (81) in the direction of the piston crown end (111) facing the combustion space of the piston (1) and a lubricant collection element (82) to prevent lubricant from flowing downwardly, wherein the lubricant is collected in the lubricant collection element (82) at least at one location of the travel path of the piston and is released when the piston moves from the top dead center position to the bottom dead center position or from the bottom dead center position to the top dead center position.

15. A method in accordance with claim 14, wherein the lubricant is released during the period of acceleration of the piston between the bottom dead center and the top dead center position.
